**Europäisches Patentamt**

**European Patent Office**

**Office européen des brevets**

(11) Veröffentlichungsnummer: **0 628 616 A1**

## (12) EUROPÄISCHE PATENTANMELDUNG

(21) Anmeldenummer: **94106388.5**

(22) Anmeldetag: **25.04.94**

(51) Int. Cl.5: **C09J 7/00**, C09J 4/06, A61L 15/58

(30) Priorität: **15.05.93 DE 4316317**

(43) Veröffentlichungstag der Anmeldung: **14.12.94 Patentblatt 94/50**

(84) Benannte Vertragsstaaten: **AT BE CH DE DK ES FR GB GR IE IT LI LU NL PT SE**

(71) Anmelder: **Lohmann GmbH & Co. KG Irlicher Strasse 55 D-56567 Neuwied (DE)**

(72) Erfinder: **Czech, Zbigniew Rostocker Strasse 10 D-56075 Koblenz (DE)**
Erfinder: **Blum, Walter Kurtrierer Strasse 2 D-56567 Neuwied (DE)**

(74) Vertreter: **Flaccus, Rolf-Dieter, Dr. Patentanwalt Sperlingsweg 32 D-50389 Wesseling (DE)**

(54) **Trägerlose Haftklebebänder mit unterschiedlicher Haftung auf beiden Seiten und Verfahren zu ihrer Herstellung.**

(57) Es werden Haftklebebänder mit unterschiedlicher Haftung auf beiden Seiten, die trägerlos sind und aus einer Mischung von lösemittelfreien carboxylgruppenhaltigen UV-vernetzbaren Polymerisaten mit mehrfunktionellen strahlenaktivierbaren (Methacrylaten) oder Acrylatoligomeren und einem Fotoinitiator nach flächiger Verteilung durch UV-Bestrahlung herstellbar sind, ein Verfahren zu ihrer Herstellung und ihre Verwendung beschrieben.

EP 0 628 616 A1

Die vorliegende Erfindung betrifft trägerlose Haftklebebänder mit unterschiedlicher Haftung auf beiden Seiten und deren Herstellung mittels UV-Strahlen sowie deren Verwendung als selbstklebende Etiketten, Schutzfolien oder trägerlose Pflaster.

Doppelseitige Haftklebebänder mit unterschiedlicher Haftung auf beiden Seiten sind schon bekannt, allerdings nur mit schichtförmigen Trägern. Der Nachteil der trägerhaltigen Konstruktion liegt u.a. darin, daß der Herstellungsprozeß solcher Klebebänder nicht durch das direkte Auftragen von Haftklebeschichten auf den Träger erfolgen kann und somit die Produktion nur durch mehrere Schritte im teureren Transferverfahren möglich ist. Diese trägerhaltigen doppelseitigen Haftklebebänder weisen im Vergleich zu trägerlosen Systemen eine gewisse Steifigkeit, Anpassungsschwierigkeiten zur zu verklebenden Oberfläche und geringere thermische Belastbarkeit auf.

Bei bestimmten Anwendungsfeldern wie beispielsweise bei selbstklebenden Schutzfolien für die Automobilindustrie für die Abdeckung von Autokarosserien, ist es enorm wichtig, besonders die unebenen Karosserieteile ganzflächig sorgfältig abzudecken. Die bisher eingesetzten klebrig ausgerüsteten PE- oder PP-Folien erfüllen aufgrund ihrer Steifigkeit nur bedingt diese Aufgabe.

Hier bietet sich der Einsatz von trägerlosen Haftklebebändern mit unterschiedlicher Haftung auf beiden Seiten an, die sich durch Viskoelastizität und Anschmiegsamkeit auszeichnen und ein Anpassungsvermögen zur unebenen Fläche besitzen.

Schutzfolien finden auch eine breite Anwendung bei Abdeckung von zahlreichen Möbel- oder Sportartikeln. Auch bei der Bearbeitung von Metallplatten beispielsweise beim Tiefziehen werden die Schutzfolien, die mit dem Metall tiefgezogen werden, eingesetzt.

Genauso denkbar sind selbstklebende Etiketten aus trägerlosen Haftklebebändern, bei denen eine Seite nicht klebrig eingestellt wurde. Diese Seite zeichnet sich durch eine gute Bedruckbarkeit aus. Außerdem läßt sich diese Etikettseite einwandfrei beschriften oder nachbehandeln.

Ein interessantes Gebiet bildet der Einsatz von trägerlosen Haftklebebändern mit unterschiedlicher Haftung auf beiden Seiten (eine Seite wird nicht klebrig eingestellt) zur Herstellung von trägerlosen Pflastern. Im Vergleich mit kommerziellen Pflastern, wo ein Hotmelt oder eine lösemittelhaltige Haftklebemasse durch ein zeit- und kostenaufwendiges Verfahren auf ein Gewebe, Vlies oder eine Folie aufgebracht wird, zeichnen sich trägerlose Pflaster durch eine einfache Konstruktion aus.

Die JP 3 252 484 beschreibt ein Herstellungsverfahren eines doppelseitigen, auf beiden Seiten unterschiedlich haftklebenden Bandes, wobei ein polymerer Träger mit unterschiedlichen UV-vernetzbaren Haftklebemassen beschichtet wurde.

Aus der EP 0 197 662 sind doppelseitige Haftklebebänder mit einer tack-free Klebeschicht bekannt. Die Nichtklebfähigkeit der einen Klebeschicht wurde durch eine Vernetzung des carboxylgruppenhaltigen Basispolymers mit mehrwertigen Kationen erreicht.

Diese Klebebandkonstruktion zeigt die typischen Nachteile für trägerhaltige, doppelseitige Haftklebebänder wie die Steifigkeit und nicht genügende Elastizität. Aufgrund der Reaktion zwischen mehrwertigen kationischen Substanzen mit Carboxylsäuregruppen kann die Herstellung aus eiem lösemittelfreien System nicht erfolgen.

Die Aufgabe der vorliegenden Erfindung ist es daher, die von den obigen Nachteilen freien trägerlosen Klebebänder mit unterschiedlicher Haftung auf beiden Seiten und ein Verfahren zu ihrer Herstellung bereitzustellen.

Diese Aufgabe wird erfindungsgemäß gelöst durch Haftklebebänder mit unterschiedlicher Haftung auf beiden Seiten, dadurch gekennzeichnet, daß sie trägerlos sind und aus einer Mischung von lösemittelfreien carboxylgruppenhaltigen UV-vernetzbaren Polymerisaten mit mehrfunktionellen strahlenaktivierbaren (Meth)-acrylaten oder Acrylatoligomeren und einem Fotoinitiator nach flächiger Verteilung durch UV-Bestrahlung herstellbar sind.

Überraschenderweise ist festzustellen, daß die bestrahlte Seite stark haftklebend ausgebildet ist und die andere Seite des Bandes nur sehr schwach haftet.

Als carboxylgruppenhaltiges UV-vernetzbares Polymerisat wird erfindungsgemäß ein solches bevorzugt, daß durch Polymerisation aus folgenden Komponenten gebildet wird:
- 40 bis 90 Gew.-% eines oder mehrerer Alkyl(meth)acrylate mit 4 bis 12 C-Atomen im Alkylrest
- 5 bis 40 Gew.-% eines oder mehrerer Alkyl(meth)acrylate mit 1 bis 3 C-Atomen im Alkylrest
- 1 bis 30 Gew.-% eines oder mehrerer hydroxylgruppenhaltiger (Meth)acrylate
- 0,05 bis 25 Gew.-% einer oder mehrerer Vinylcarbonsäuren
- 0,01 bis 5 Gew.-% eines oder mehrerer polymerisationsfähiger Fotoinitiatoren.

Geeignete Alkyl(meth)acrylate mit 4 bis 12 C-Atomen im Alkylrest werden aus der Gruppe Butyl-, Pentyl-, Hexyl-, Heptyl-, Octyl-, 2-Ethylhexyl-, Isooctyl-, 2-Methylheptyl-, Nonyl-, Decyl-, und/oder Dodecyl-(meth)acrylat ausgewählt. Besonders bevorzugt werden Isodecylacrylat, 2-Ethylhexylacrylat und Butylacrylat, die sich problemlos bis zu hohen Umsätzen copolymerisieren lassen.

Als Alkyl(meth)acrylate mit 1 bis 3 C-Atomen im Alkylrest kommen vor allem Methylacrylat, Methylmethacrylat, Ethylacrylat, Ethylmethacrylat, Propylacrylat und/oder Propylmethacrylat in Frage, wobei Methylacrylat und Ethylacrylat besonders geeignet sind. Die beiden erwähnten Acrylate beeinflussen äußerst positiv die Weichmacherbeständigkeit der gemäß der vorliegenden Erfindung hergestellten Haftklebebänder.

Als hydroxylgruppenhaltige (Meth)acrylate, d.h. Ester der (Meth)acrylsäure werden die Hydroxyalkyl-(meth)acrylate bevorzugt, insbesondere 2-Hydroxyethyl(meth)acrylat, 2-Hydroxypropyl(meth)acrylat, 3-Hydroxypropyl(meth)acrylat und/oder 4-Hydroxybutyl(meth)acrylat, die allein oder im Gemisch untereinander eingesetzt werden können.

Als Vinylcarbonsäure wird (Meth)acrylsäure, $\beta$-Acryloyloxypropionsäure, Vinylessigsäure, Trichloracrylsäure, Dimethylacrylsäure, Crotonsäure, Fumarsäure, Aconitsäure und/oder Itaconsäure bevorzugt. Besonders bevorzugt sind Acrylsäure, $\beta$-Acryloyloxypropionsäure und Trichloracrylsäure.

Die polymerisationsfähigen Fotoinitiatoren, die in die Hauptkette eingebaut im fertigen Polymerisat UV-aktivierbare Vernetzungszentren bilden, bestehen vorteilhaft entweder aus Acetophenon- oder Benzophenonderivaten, die allein oder in Mischung untereinander eingesetzt werden. Besonders bevorzugt sind 4-(2-Acryloyloxyethoxy)-phenyl(2-hydroxy-2-propyl)-keton und 4-Methoxy-4'-acryloyloxybenzophenon.

Das carboxylgruppenhaltige UV-vernetzbare Polymerisat wird in an sich bekannter Weise aus o.e. Ausgangsmonomeren (Alkyl(meth)acrylate, hydroxylgruppenhaltiges (Meth)acrylat, Vinylcarbonsäure, polymerisationsfähiger Fotoinitiator) durch einen Polymerisationsprozeß in Ethylacetat formuliert. Als Radikalbildner diente AIBN in einer Konzentration von 0,4 Gew.-%. Die mit einem Feststoffgehalt von 50 Gew.-% resultierenden Polymerisate besitzen bei RT eine Viskosität von 1,0 bis 3,0 Pa•s.

Das Abdestillieren von Lösemitteln (Ethylacetat) erfolgt zuerst unter normalem Druck und danach unter Vakuum 20 mm Hg. Der Gehalt an flüchtigen Bestandteilen (Trocknung 2 h bei 125°C) lag unter 1,5 Gew.-%.

Das resultierende lösemittelfreie Polymerisat ist bei 150°C beschichtungsfähig und besitzt je nach Ausgangsrezeptur bei dieser Temperatur eine Viskosität von 0,7 bis 5,0 Pa•s.

Als mehrfunktionelles, strahlenaktivierbares (Meth)acrylat oder Acrylatoligomer werden bevorzugt mehrfunktionelle Acrylate oder Urethan-Acrylate, Polyester-Acrylate und/oder Polyether-Acrylate eingesetzt. Besonders bevorzugt sind mehrfunktionelle Acrylate wie 1,6-Hexandioldiacrylat und Pentaerythritoltriacrylat und mehrfunktionelle Urethan-Acrylate, Polyester-Acrylate oder Polyether-Acrylate werden durch Umsetzung entsprechender hydroxylgruppenhaltiger Urethane, Polyester oder Polyether mit Acryloylchlorid hergestellt.

Gegenstand der vorliegenden Erfindung ist auch ein Verfahren zur Herstellung von trägerlosen Haftklebebändern mit unterschiedlicher Haftung auf beiden Seiten gemäß Anspruch 11.

Geeignete radikalische Fotoinitiatoren für die Polymerisation, die dem carboxylgruppenhaltigen, UV-vernetzbaren Polymerisat zugesetzt werden, werden aus der Gruppe der Benzil-Derivate, Benzoin-Derivate, Benzophenone, Dialkoxyacetophenone, Hydroxyalkylphenone, $\alpha$-Acyloxymester, $\alpha$-Halogenketone, Thioxanthone, Fluorenon-Derivate und/oder Michlers Keton ausgewählt.

Das mehrfunktionelle strahlenaktivierbare (Meth)acrylat oder Acrylatoligomer wird dem carboxylgruppenhaltigen UV-vernetzbaren Polymerisat in einem Anteil von 5 bis 25 Gew.-% und der radikalische Fotoinitiator in einem Anteil von 0,1 bis 6 Gew.-%, bezogen auf die Menge des Polymerisates, eingesetzt.

Die Dicke der aus lösemittelfreiem, carboxylgruppenhaltigem, UV-vernetzbarem Polymerisat einschließlich mehrfunktionellem strahlenaktivierbarem (Meth)acrylat oder Oligomeracrylat und Fotoinitiator gebildeten Schicht liegt im Bereich 0,01 mm bis 2,0 mm, vorzugsweise 0,05 bis 1,0 mm.

Besonders geeignete Fotoinitiatoren zur Verkürzung der Zeit/der UV-initiierten Polymerisation sind u.a. Benzophenon, Michlers Keton und 1-Hydroxycyclohexylphenylketon.

Durch entsprechende Wahl der Strahlenquelle, Fotoinitiatorart und -konzentration, sowie der Funktionalität und Reaktivität des polymerisationsfähigen Fotoinitiators und des mehrfunktionellen strahlenaktivierbaren (Meth)acrylates oder Acrylatoligomers können die Bestrahlungszeiten und damit verbundene Beschichtungsgeschwindigkeiten eingestellt werden. Die Bestrahlung wird mit UV-Lampe, UV-Laser oder Sonnenlicht durchgeführt.

Das carboxylgruppenhaltige, lösemittelfreie, UV-vernetzbare Polymerisat wird bei RT mit einem mehrfunktionellen, strahlenaktivierbaren (Meth)acrylat oder Acrylatoligomer und radikalischem Fotoinitiator homogenisiert. Die Viskosität des so erhaltenen Gemisches liegt bei RT bei 0,5 bis 2,5 Pa•s und ist für den Beschichtungsprozeß bestens geeignet.

Die Beschichtung kann im direkten Auftrag z.B. durch Rakeln, Rollen, Walzen oder mittels Düsen erfolgen. Beim indirekten Auftrag, d.h. im Transverfahren, können die ein mehrfunktionelles strahlenaktivier-

EP 0 628 616 A1

bares (Meth)acrylat oder Acrylatoligomer und radikalischen Fotoinitiator enthaltenden Polymerisate in üblicher Weise zunächst auf einen nicht haftenden Träger z.B. siliconisiertes Papier, siliconisierte Folie, aufgebracht, bestrahlt und als trägerloses Haftklebeband mit einer Abdeckung abgewickelt werden.

Die nach dem erfindungsgemäßen Verfahren enthaltenen trägerlosen Haftklebebänder mit unterschiedlicher Haftung auf beiden Seiten werden zur Herstellung von selbstklebenden Schutzfolien, Etiketten und trägerlosen Pflastern verwendet.

Die Erfindung wird nachstehend anhand folgender Beispiele erläutert:

Beispiel 1:

100 g eines lösemittelfreien, carboxylgruppenhaltigen, UV-vernetzbaren Polymerisates aus 85 Gew.-% 2-Ethylhexylacrylat, 5 Gew.-% Methylacrylat, 6 Gew.-% Acrylsäure, 1 Gew.-% 2-Hydroxyethylacrylat und 3 Gew.-% 4-(2-Acryloyloxyethoxy)-phenyl-(2-hydroxy-2-propyl)-keton wurden mit 20 g eines mehrfunktionellen Oligomeracrylats Uvecryl 220 und 2 g Fotoinitiator Irgacure 184 abgemischt. (Viskosität bei RT: 1,8 Pa•s), auf eine Dehäsivfolie mit ca. 200 µm beschichtet und durch Bestrahlung mit einer UV-Lampe vernetzt. Das mit der UV-Lampe bestrahlte Muster ist 50 mm x 150 mm groß.

Es wurden bei der UV-Bestrahlung folgende Bedingungen eingehalten:

| UV-Quelle: | UV-Lampe UVRC 500 (Leistung: 500 W) |
|---|---|
| Bestrahlungszeit: | 20 Sekunden |
| Bestrahlungsabstand: | 50 mm |
| (UV-Lampe/bestrahlte Oberfläche) | |

Es resultierte eine trägerlose Haftklebeschicht mit unterschiedlicher Haftung auf beiden Seiten mit ausgezeichneter thermischer Belastbarkeit und weitgehender Resistenz gegen organische Lösemittel. Die bestrahlte Klebebandseite besitzt im Vergleich zu der anderen Seite des Klebebandes eine viel stärkere Haftung. Die nach AFERA 4001 ermittelten Klebkraftwerte bei 20°C liegen bei 7,5 N (bestrahlte Seite) und bei 1,0 N (andere Seite). Die nach AFERA 4015 ermittelten Klebkraftwerte bei 70°C liegen bei 5,5 N (bestrahlte Seite) und beo 0,5 N (andere Seite). Das 25 mm x 25 mm grosse Muster hat sich nach einer Woche Lagerung in Aceton nicht gelöst.

Beispiele 2 bis 16:

Nach der Vorschrift im Beispiel 1 werden die aus den in den Tabellen 1 und 2 aufgeführten Ausgangskomponenten gewonnenen Polymerisate nach der Abmischung entsprechend beschichtet und UV-Strahlen ausgesetzt.

Die Prüfresultate der daraus resultierenden trägerlosen Haftklebebänder mit einer Dicke bei allen Beispielen von 200 µm werden in der Tabelle 3 zusammengefasst.

Beispiel 17:

Dieses Beispiel betrifft die Verwendung eines erfindungsgemäßen Haftklebebandes als Schutzfolie.

Aus dem nach Beispiel 1 hergestellten Muster wurden drei trägerlose 15 mm x 100 mm große Haftklebestreifen ausgeschnitten und auf die Substrate: Glas, PP und PE vollfächig mit klebrigerer Seite aufgeklebt. Getestet wurde die Klebkraft (nach AFERA 4015) nach 10', 1 h, 24 h und 7 Tagen. Die Klebkraftwerte werden tabellarisch zusammengefasst:

| Kontaktzeit | Klebkraft auf... [N/15 mm] | | |
|---|---|---|---|
| | Glas | PP | PE |
| 10' | 3,5 | 2,5 | 1,5 |
| 1 h | 4 | 2,5 | 2 |
| 24 h | 4,5 | 3 | 2,5 |
| 1 Woche | 4,5 | 3 | 2,5 |

Das aufgeklebte trägerlose Haftklebeband läßt sich problem- und rückstandslos von den drei geprüften Materialien entfernen. Die gemessenen Klebkraftwerte liegen als Funktion der Verklebungszeit bei hier verwendeten Substraten auf einem relativ konstanten Niveau, was u.a. derartige trägerlose Haftklebebänder für die Anwendung als Schutzfolien prädestiniert.

Abkürzungsverzeichnis

| | | |
|---|---|---|
| APS | - | $\beta$-Acryloyloxypropionsäure |
| AS | - | Acrylsäure |
| BA | - | Butylacrylat |
| BP | - | Benzophenon |
| EA | - | Ethylacrylat |
| 2-EHA | - | 2-Ethylhexylacrylat |
| HDDA | - | 1,6-Hexandioldiacrylat |
| 2-HEA | - | 2-Hydroxyethylacrylat |
| 2-HPA | - | 2-Hydroxypropylacrylat |
| 2-HPMA | - | 2-Hydroxypropylmethacrylat |
| I 184 | - | Irgacure 184 (Fotoinitiator der Fa. Ciba-Geigy: 1-Hydroxy-cyclohexylphenylketon |
| IDA | - | Isodecylacrylat |
| MA | - | Methylacrylat |
| MABP | - | 4-Methoxy-4'-acryloyloxybenzophenon |
| MK | - | Michlers Keton |
| P 36 | - | Uvecryl 36 (Fotoinitiator der Fa. UCB auf Benzophenon-Basis) |
| PETA | - | Pentaerythritoltriacrylat |
| TCiAS | - | Trichloracrylsäure |
| U 220 | - | Uvecryl 220 (hexafunktionelles Urethanacrylat der Fa. UCB |
| ZLI 3331 | - | Fotoinitiator der Fa. Ciba-Geigy (4-(2-Acryloyloxyyethoxy)-phenyl(2-hydroxy-2-propyl)-keton) |

Tabelle 1 : Zusammensetzung der carboxylgruppenhaltigen UV-vernetzbaren Polymerisate

| Beispiel | C$_4$-C$_{12}$ Alkyl(meth)-acrylat [Gew.-%] | | | C$_1$-C$_3$ Alkyl(meth)-acrylat [Gew.-%] | | Hydroxy(meth)acrylat [Gew.-%] | | | Vinylcarbonsäure [Gew.-%] | | | Polymerisationsfähiger Fotoinitiator [Gew.-%] | | |
|---|---|---|---|---|---|---|---|---|---|---|---|---|---|---|
| | IDA | 2-EHA | BA | MA | EA | 2-HEA | 2-HPA | 2-HPMA | AS | TClAS | APS | ZLI3331 | P 36 | MABP |
| 2 | 61 | - | - | 29 | - | - | 1 | - | 6 | - | - | 3 | - | - |
| 3 | - | 60 | 20 | - | 10 | 6 | - | - | - | 3 | - | - | - | 1 |
| 4 | - | 40 | - | - | 30 | - | - | 20 | - | - | 5 | - | 5 | - |
| 5 | - | - | 58 | 5 | 5 | 10 | 5 | - | 15 | - | - | 2 | - | - |
| 6 | - | 52,5 | - | 15 | - | - | - | 30 | 2 | - | - | 0,5 | | |
| 7 | 40 | - | - | - | 25 | - | 25 | - | - | - | 7 | - | 2 | 1 |
| 8 | 51 | - | - | 20 | - | 15 | - | 5 | - | 5 | - | - | 4 | - |
| 9 | - | - | 82 | 5 | - | 5 | - | - | 6,5 | - | - | - | - | 1,5 |
| 10 | - | 68 | - | - | 7 | - | 12,5 | - | 8 | 2 | - | 2,5 | - | - |
| 11 | 35 | - | 35 | 10 | - | - | - | 11 | 3 | - | 4 | - | - | 2 |
| 12 | 20 | 40 | - | - | 10 | 20 | - | - | - | 7 | - | 1 | 2 | - |
| 13 | - | 60 | - | 15,5 | - | 5 | - | 10 | 2 | 6 | - | 1,5 | - | - |
| 14 | 40 | - | 40 | - | 6 | - | 8 | - | 1 | - | - | - | - | 5 |
| 15 | 70 | - | - | - | 19 | 3 | - | - | 3 | - | 3 | 1 | - | 1 |
| 16 | - | 50 | - | - | 28 | - | - | 16 | 3 | 1 | - | 2 | - | - |

EP 0 628 616 A1

Tabelle 2 :  Rezeptur der UV-bestrahlten Gemische

| Polymerisat aus dem | Mehrfunktionelles strahlenaktivierbares (Meth)acrylat/Acrylatoligomer [Gew.-%] | | | Fotoinitiator [Gew.-%] | | |
|---|---|---|---|---|---|---|
| Beispiel | U 220 | HDDA 179 | PETA | BP | I 184 | MK |
| 2 | 15 | – | – | – | 2 | – |
| 3 | 5 | 5 | – | – | – | 1 |
| 4 | 20 | – | 5 | 3 | – | – |
| 5 | – | 15 | – | – | 2,5 | – |
| 6 | – | – | 12 | – | – | 2 |
| 7 | 7 | – | – | 6 | – | – |
| 8 | 25 | – | – | 0,5 | – | – |
| 9 | 5 | 10 | 5 | 1 | 1,5 | – |
| 10 | – | – | 20 | – | 3 | – |
| 11 | – | 6 | 4 | – | 1 | 1 |
| 12 | 13 | – | – | 5 | – | – |
| 13 | 20 | – | – | – | 0,8 | 0,2 |
| 14 | 15 | 2 | 3 | 2,5 | – | – |
| 15 | – | – | 15 | – | 2,5 | 0,5 |
| 16 | 18 | – | 2 | – | – | 2,5 |

EP 0 628 616 A1

Tabelle 3

| Gemessene Eigenschaften der trägerlosen Haftklebebänder | | | | | |
|---|---|---|---|---|---|
| Beispiel | Klebkraft (nach AFERA 4015) [N] | | | | Beständigkeit gegen Aceton* |
| | bestrahlte Seite | | andere Seite | | |
| | 20 °C | 70 °C | 20 °C | 70 °C | |
| 2 | 12 | 8,5 | 3,5 | 2 | gut |
| 3 | 18,5 | 9,5 | 4,5 | 3 | gut |
| 4 | 8 | 6,5 | 2 | 1,5 | gut |
| 5 | 13 | 8 | 3,5 | 2,5 | gut |
| 6 | 15 | 10 | 4 | 2 | gut |
| 7 | 11,5 | 7 | 2,5 | 1,5 | gut |
| 8 | 10,5 | 6 | 2 | 1 | gut |
| 9 | 21 | 13,5 | 6 | 3,5 | gut |
| 10 | 16 | 10 | 5 | 3,5 | gut |
| 11 | 14,5 | 9,5 | 3,5 | 2 | gut |
| 12 | 11 | 7,5 | 2,5 | 1,5 | gut |
| 13 | 9 | 6,5 | 1,5 | 1 | gut |
| 14 | 10,5 | 6 | 2 | 1,5 | gut |
| 15 | 13 | 9,5 | 4,5 | 2 | gut |
| 16 | 12,5 | 9 | 4 | 2,5 | gut |

*) Aus dem trägerlosen Haftklebeband wird ein Muster (25 mm x 25 mm) ausgeschnitten und eine Woche bei Raumtemperatur in Aceton gelagert. Beurteilt wurde visuell der Materialschwund d.h. die Löslichkeit bzw. die Volumenvergrößerung (Quellbarkeit) des geprüften Musters in Aceton.

Die experimentelle Bestimmung der Klebkraft bei 20 °C und 70 °C der direkt bestrahlten und unteren Seite des trägerlosen Haftklebebandes sowie seine Beständigkeit gegen Aceton zeigt eindeutig, daß sich die erfindungsgemäßen Endprodukte durch eine gute thermische Belastbarkeit und weitgehende Resistenz gegen organische Lösemittel (Aceton) auszeichnen. Nach 7tägiger Lagerung in Aceton war keine vollständige Auflösung eingetreten.

**Patentansprüche**

1. Haftklebebänder mit unterschiedlicher Haftung auf beiden Seiten, dadurch gekennzeichnet, daß sie trägerlos sind und aus einer Mischung von lösemittelfreien carboxylgruppenhaltigen UV-vernetzbaren Polymerisaten mit mehrfunktionellen strahlenaktivierbaren (Methacrylaten) oder Acrylatoligomeren und einem Fotoinitiator nach flächiger Verteilung durch UV-Bestrahlung herstellbar sind.

2. Haftklebebänder nach Anspruch 1, dadurch gekennzeichnet, daß die bestrahlte Seite stärker haftklebend ist als die andere Seite des Bandes ausgebildet ist.

3. Haftklebebänder nach einem oder mehreren der vorangehenden Ansprüche, dadurch gekennzeichnet, daß das lösemittelfreie carboxylgruppenhaltige UV-vernetzbare Polymerisat aus
   - 40 bis 90 Gew.-% eines oder mehrerer Alkyl(meth)acrylate mit 4 bis 12 C-Atomen im Alkylrest
   - 5 bis 40 Gew.-% eines oder mehrerer Alkyl(meth)acrylate mit 1 bis 3 C-Atomen im Alkylrest
   - 1 bis 30 Gew.-% eines oder mehrerer hydroxylgruppenhaltigen (Meth)acrylate
   - 0,05 bis 25 Gew.-% einer oder mehrerer Vinylcarbonsäuren
   - 0,01 bis 5 Gew.-% eines oder mehrerer polymerisationsfähiger Fotoinitiatoren
   gebildet wird.

4. Haftklebebänder nach Ansprüchen 1 bis 3, dadurch gekennzeichnet, daß das Alkyl(meth)acrylat mit 4 bis 12 C-Atomen im Alkylrest aus der Gruppe Butyl-, Pentyl-, Hexyl-, Heptyl-, Octyl-, 2-Ethylhexyl-, Isooctyl-, 2-Methylheptyl-, Nonyl-, Decyl- und/oder Dodecyl(meth)acrylat ausgewählt ist.

5. Haftklebebänder nach einem oder mehreren der Ansprüche 1 bis 4, dadurch gekennzeichnet, daß das Alkyl(meth)acrylat mit 1 bis 3 C-Atomen im Alkylrest ein Methyl(meth)acrylat, Ethyl(meth)acrylat und/oder Propyl(meth)acrylat ist.

6. Haftklebebänder nach einem oder mehreren der Ansprüche 1 bis 5, dadurch gekennzeichnet, daß als hydroxylgruppenhaltiges (Meth)acrylat ein 2-Hydroyethyl(meth)acrylat, 2-Hydroxypropyl(meth)acrylat, 3-Hydroxypropyl(meth)acrylat und/oder 4-Hydroxybutyl(meth)acrylat eingesetzt wird.

7. Haftklebebänder nach einem oder mehreren der Ansprüche 1 bis 6, dadurch gekennzeichnet, daß als Vinylcarbonsäuren (Meth)acrylsäure, $\beta$-Acryloyloxypropionsäure, Vinylessigsäure, Trichloracrylsäure, Dimethylacrylsäure, Crotonsäure, Fumarsäure, Aconitsäure und/oder Itaconsäure eingesetzt werden.

8. Haftklebebänder nach einem oder mehreren der Ansprüche 1 bis 7, dadurch gekennzeichnet, daß der polymerisationsfähige Fotoinitiator aus der Gruppe der Acetophenone und/oder Benzophenone ausgewählt wird.

9. Haftklebebänder nach einem oder mehreren der Ansprüche 1 bis 8, dadurch gekennzeichnet, daß als mehrfunktionelles, strahlenaktivierbares (Meth)acrylat oder Acrylatoligomer mehrfunktionelle Acrylate oder Urethan-Acrylate, Polyester-Acrylate und/oder Polyether-Acrylate eingesetzt sind.

10. Haftklebebänder nach einem oder mehreren der Ansprüche 1 bis 9, dadurch gekennzeichnet, daß die Konzentration des mehrfunktionellen strahlenaktivierbaren (Meth)acrylat oder Acrylatoligomers von 5 bis 25 Gew.-%, bezogen auf die Menge des Polymerisats beträgt.

11. Verfahren zur Herstellung von trägerlosen Haftklebebändern mit unterschiedlicher Haftung auf beiden Seiten nach einem oder mehreren der vorangehenden Ansprüche durch Mischen von lösemittelfreien carboxylgruppenhaltigen UV-vernetzbaren Polymerisaten mit mehrfunktionellen strahlenaktivierbaren (Meth)acrylaten oder Acrylatoligomeren und einem Fotoinitiator, flächige Verteilung und UV-Bestrahlung dieser Mischung.

12. Verfahren nach Anspruch 11, dadurch gekennzeichnet, daß ein Fotoinitiator aus der Gruppe der Benzyl-Derivate, Benzoin-Derivate, Benzophenone, Dialkoxyacetophenone, Hydroxyalkylphenone, $\alpha$-Acylox-ymester, $\alpha$-Halogenketone, Thioxanthone, Fluorenon-Derivate und/oder Michlers Keton eingesetzt wird.

13. Verfahren nach einem oder mehreren der Ansprüche 11 und 12, dadurch gekennzeichnet, daß der Fotoinitiator in einer Konzentration von 0,1 bis 6,0 Gew.-%, bezogen auf die Menge des Polymerisates, eingesetzt wird.

14. Verfahren nach einem oder mehreren der Ansprüche 11 bis 13, dadurch gekennzeichnet, daß die UV-Bestrahlung mit UV-Lampe, UV-Laser oder Sonnenlicht durchgeführt wird.

15. Verwendung der trägerlosen Haftklebebänder mit unterschiedlicher Haftung auf beiden Seiten nach einem oder mehreren der vorangehenden Ansprüche zur Herstellung von selbstklebenden Etiketten, Schutzfolien oder trägerlosen Pflastern.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | DATABASE WPI Week 9236, Derwent Publications Ltd., London, GB; AN 92-295733 & JP-A-4 202 586 (NITTO DENKO CORP) 23. Juli 1992 * Zusammenfassung * --- | 1,11,13, 15 | C09J7/00 C09J4/06 A61L15/58 |
| A | EP-A-0 194 706 (BANDO CHEMICAL INDUSTRIES) * Zusammenfassung * --- | 1,3 | |
| A | GB-A-2 048 274 (NATIONAL STARCH) --- | 1 | |
| A | EP-A-0 313 071 (NICHIBAN CO LTD.) --- | 3 | |
| A | EP-A-0 084 220 (MINNESOTA MINING AND MFG. COMPANY) * Seite 3, Zeile 1 - Zeile 9 * * Seite 5, Absatz 2 * --- | 3 | |
| A,D | EP-A-0 197 662 (MINNESOTA MINING AND MFG. COMPANY) ----- | | |

**RECHERCHIERTE SACHGEBIETE (Int.Cl.5)**

C09J

Der vorliegende Recherchenbericht wurde für alle Patentansprüche erstellt

| Recherchenort | Abschlußdatum der Recherche | Prüfer |
|---|---|---|
| DEN HAAG | 30. August 1994 | Girard, Y |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
...........................................................................
& : Mitglied der gleichen Patentfamilie, übereinstimmendes Dokument

EPO FORM 1503 03.82 (P04C03)